# FASCICULE DE BREVET EUROPEEN

(11) **EP 3 395 863 B1**
(45) Date de publication et mention de la délivrance du brevet: **19.06.2019**
(21) Numéro de dépôt: 18163764.6
(22) Date de dépôt: 23.03.2018
(51) Int. Cl.: C08J 3/12

(54) **PROCEDE DE FABRICATION D'UNE POUDRE CHARGEE ET D'UN PRODUIT EN MATERIAUX COMPOSITES ELECTRIQUEMENT CONDUCTEUR**
HERSTELLUNGSVERFAHREN EINES AUFGELADENEN PULVERS UND EINES ELEKTRISCH LEITENDEN PRODUKTS AUS VERBUNDWERKSTOFFEN
A METHOD OF FABRICATING A LOADED POWDER, AND A PRODUCT MADE OF ELECTRICALLY CONDUCTIVE COMPOSITE MATERIALS

(30) Priorité: 20.04.2017 FR 1770403
(43) Date de publication de la demande: 31.10.2018
(73) Titulaire: Airbus Helicopters, 13725 Marignane Cedex (FR)
(72) Inventeur: JOEDICKE, Philippe, 13580 LA FARE LES OLIVIERS (FR)
(74) Mandataire: GPI & Associés

(56) Documents cités:
- FR-A1- 2 995 222
- US-A- 3 856 699
- US-A- 5 709 740
- US-B2- 6 911 169
- US-B2- 7 432 448

## Description

La présente invention concerne un procédé de fabrication d'une poudre chargée et d'un produit en matériaux composites électriquement conducteur.

Le terme « produit » utilisé par la suite désigne un produit fini en tant que tel, ou encore un semi-produit pouvant être utilisé par ailleurs. Ainsi, le produit peut par exemple prendre la forme d'un semi-produit formant une plaque en matériaux composites, cette plaque étant par exemple découpée par la suite pour fabriquer une pièce particulière.

Un produit en matériaux composites comporte au moins un renfort noyé dans une matrice. Le terme « renfort » désigne un matériau dont la résistance mécanique est nettement plus élevée que la résistance mécanique de la matrice.

Par exemple, les renforts peuvent prendre la forme de fibres de carbone, de verre, d'aramide... Ces fibres peuvent en outre être notamment utilisées sous la forme d'un tissu, d'une nappe ou encore de fils unidirectionnels.

La matrice peut par exemple prendre la forme de matrices résineuses qui ne sont pas électriquement conductrices.

Un produit en matériaux composites à base de résines peut être fabriqué en utilisant diverses techniques.

Selon une technique d'imprégnation dite par « voie film », la résine est injectée dans une extrudeuse pour être transformée en un film de faible épaisseur. Ce film de résine est accolé à un renfort. Le renfort est solidarisé au film de résine en étant chauffé et pressé contre le film de résine par une presse ou un plateau par exemple.

Selon une technique d'imprégnation dite par « voie sèche », la résine prend la forme d'une poudre. Cette résine en poudre est répartie par poudrage à l'air libre sur le renfort à imprégner. L'ensemble renfort/poudre est alors chauffé pour que la résine fonde afin d'adhérer au renfort.

Selon une technique d'imprégnation dite par « voie humide », la résine prend la forme d'une résine en poudre baignant dans un liquide. Le renfort passe alors dans ledit liquide afin que la poudre soit disposée sur ce renfort. L'ensemble renfort/poudre est alors chauffé pour que la résine fonde afin d'adhérer au renfort.

Ces techniques permettent par exemple d'obtenir des plaques de renforts imprégnés par une résine. Un stratifié en matériaux composites peut alors être obtenu en empilant de telles plaques les unes sur les autres et en compactant l'empilement.

Toutefois, ce stratifié en matériaux composites n'est pas électriquement conducteur, ou possède une faible capacité à conduire un courant électrique.

Pour réaliser des panneaux électriquement conducteurs, par exemple dans le cadre de parois d'un aéronef, des treillis métalliques peuvent être insérés dans le stratifié en matériaux composites.

De manière alternative, un clinquant métallique peut être fixé à un stratifié en matériaux composites.

Le document US 6.911.169 présente un produit composite comprenant des fibres de carbone.

Le document situé à l'adresse internet suivante http://www.sft.asso.fr/Local/sft/dir/user-3775/documents/actes/journeessft/JSFT_08_01_2015/Gillet et al.pdf évoque l'utilisation d'une résine thermodure chargée de nanotubes de carbone.

Des nanoparticules de noir de carbone sont ainsi dispersées dans une résine par un agitateur pour réaliser une résine chargée. Le mélange de résine et de nanoparticules de noir de carbone imprègne alors un renfort par une méthode d'infusion ou une méthode connue sous l'acronyme RTM correspondant à l'expression anglaise « Resin Transfert Molding ».

L'utilisation de nanoparticules est néanmoins à envisager avec prudence au regard de dispositions connues d'Hygiène de Santé et d'Environnement correspondant à l'acronyme HSE.

De plus, l'agitateur peut risquer de casser les nanoparticules.

Le document FR 2.995.222 n'appartient pas au domaine technique de l'invention en ayant trait à la fabrication d'une dispersion de microcapsules de principe actif.

Le document US 3.856.699 décrit un procédé pour produire une capsule ayant des parois en cire.

Les documents US 7432448 et US 5709740 sont aussi connus.

La présente invention a alors pour objet de proposer un procédé de fabrication d'une poudre électriquement conductrice de polymères thermoplastiques permettant d'obtenir un produit en matériaux composites électriquement conducteurs.

L'invention vise ainsi un procédé de fabrication d'une poudre électriquement conductrice de polymères thermoplastiques, cette poudre électriquement conductrice de polymères thermoplastiques étant dite « poudre chargée ». Ce procédé comporte les étapes de :
- réalisation d'une poudre originelle contenant des noyaux de polymères thermoplastiques, chacun desdits noyaux comprenant un grain ou un flocon,
- réalisation de ladite poudre chargée à l'aide de la poudre originelle ainsi que de fils « submicroniques » électriquement conducteurs et de cire en formant une pluralité d'ensembles, une plus petite dimension de chaque fil submicronique étant supérieure ou égale à cent nanomètres, chaque ensemble comprenant un dit noyau ainsi qu'au moins un fil submicronique électriquement conducteur et une membrane de protection en ladite cire, au moins un dit fil et une dite membrane de protection étant disposés autour d'un dit noyau.

Par suite, ce procédé permet d'obtenir une poudre chargée. Cette poudre chargée comporte des ensembles ayant des grains ou des flocons sur lesquels sont disposés voire adsorbés des fils et une membrane de protection. Dès lors, au moins un fil et une membrane de protection sont disposés autour de la périphérie d'un grain ou d'un flocon. Chaque fil d'un dit ensemble peut être au moins partiellement agencé entre la périphérie d'un grain ou d'un flocon et la membrane de protection de cet ensemble, et/ou peut être au moins partiellement agencé dans la membrane de protection de cet ensemble, et/ou peut être au moins partiellement adhérisé à la membrane de protection de cet ensemble.

Chaque membrane de protection tend ainsi à maintenir chaque fil d'un ensemble solidaire de cet ensemble. Un noyau de polymères thermoplastiques d'un ensemble est chargé d'un ou plusieurs fils submicroniques et d'une membrane de protection, cette membrane de protection permettant de garder en contact le ou les fils de l'ensemble sur le noyau de cet ensemble.

La poudre chargée comporte alors des noyaux de polymères thermoplastiques chargés de particules fonctionnelles sous forme de fils qui peuvent conférer à l'ensemble noyau/fil/membrane de protection une autre fonction que la fonction allouée au noyau. En particulier et dans le cadre de la fabrication d'un produit en matériaux composites, le noyau peut être utilisé en tant que matrice du produit en matériaux composites et les fils peuvent conférer une conductivité électrique optimisée au produit.

Par ailleurs, la membrane de protection peut tendre à limiter l'impact de la poudre chargée en termes d'impact HSE. En effet, la membrane de protection tend à maintenir les fils solidaires de noyaux, et tend donc à limiter les risques de déplacements de fils dans l'atmosphère. Dès lors, cette poudre chargée peut tendre à réduire des risques environnementaux pour un opérateur lors de l'imprégnation des renforts, en réduisant éventuellement la présence potentielle de charges submicroniques dans l'air.

De plus, les fils sont submicroniques et non pas nanométriques, ce qui implique que la poudre chargée peut être manipulée dans un environnement ne nécessitant pas l'application des normes réservées aux éléments nanométriques.

Dès lors, la poudre chargée peut être utilisée lors de la fabrication d'un produit en matériaux composites en tant que matrice. En particulier, les voies d'imprégnation par voie sèche ou voie humide sont envisageables.

Dans le cas de la voie sèche, la membrane de protection et la taille des fils tendent à réduire l'impact de la poudre sur l'environnement de travail de l'opérateur. La membrane de protection d'un ensemble peut limiter les risques de décohésion du ou des fils et du noyau de cet ensemble, notamment lors de la manipulation de la poudre chargée lors d'opérations de transvasement, de poudrage.... Les risques HSE par la présence de fils dans l'air sont ainsi réduits.

Dans le cas de la voie humide, la poudre est dispersée dans un bain dans lequel les renforts se déplacent. La membrane de protection tend à limiter les risques de décohésion du ou des fils et du noyau de chaque ensemble dans le bain pour que les ensembles noyau/fil(s)/membrane de protection soient transférés sur le renfort en sortie du bain.

Le procédé permet en outre d'obtenir directement une poudre chargée. Ce procédé ne conduit par exemple pas à un produit issu d'extrusion devant être « micronisé » pour obtenir une poudre. Or, une telle « micronisation » peut être endommageante pour les charges et peut réduire leurs performances.

Le procédé peut de plus comporter une ou plusieurs des caractéristiques qui suivent, seules ou en combinaison.

Ainsi, chaque fil peut être inscrit dans un parallélépipède rectangle s'étendant sur une longueur comprise entre 50 micromètres inclus et 200 micromètres inclus, sur une hauteur comprise entre 100 nanomètres inclus et 400 nanomètres inclus, et une largeur comprise entre 100 nanomètres inclus et 400 nanomètres inclus.

Les fils sont ainsi des éléments submicroniques et non pas nanométriques. En effet, un élément submicronique est un élément dont la plus petite dimension est inférieure au micron et supérieure ou égale à cent nanomètres, alors qu'un élément nanométrique est un élément dont la plus petite dimension est comprise entre 1 et 100 nanomètres.

Dès lors, les normes strictes qui s'appliquent aux éléments nanométriques ne concernent pas ces fils.

Selon un aspect, chacun des noyaux peut être inscrit dans un cube présentant des côtés s'étendant chacun sur une longueur comprise entre 20 micromètres inclus et 100 micromètres inclus.

Dès lors, les noyaux sont des éléments submicroniques et non pas nanométriques. Les normes strictes qui s'appliquent aux éléments nanométriques ne concernent pas ces noyaux.

Selon un aspect, les noyaux de polymères thermoplastiques peuvent appartenir à la famille de Polyaryletherketone (PAEK) ou de Poly(sulfure de phénylène) (PPS) ou de Polyétherimide (PEI) ou de polyimide (PI).

Les noyaux peuvent ainsi être à base de polymères thermoplastiques à hautes performances. De telles polymères présentent des hautes performances chimiques et mécaniques qui leurs confèrent une très bonne propriété de tenue chimique aux différents agents chimiques. La mise en oeuvre de tels polymères est dès lors délicate, puisque ces polymères s'avèrent difficilement solubles. Toutefois, les variantes explicitées par la suite permettent d'obtenir une poudre chargée basée sur des grains ou des flocons de polymères en Polyaryletherketone (PAEK) et/ou en Poly(sulfure de phénylène) (PPS) et/ou en Polyétherimide (PEI) et/ou en polyimide (PI).

Des noyaux de polymères thermoplastiques à hautes performances chimiques présentent en outre l'avantage d'assurer une bonne imprégnation de fibres de renfort lors de la fabrication d'un produit en matériaux composites avec la poudre chargée.

Ce procédé permet donc d'obtenir une poudre chargée comprenant des noyaux aptes à bien imprégner un renfort d'un produit en matériaux composites.

Selon un aspect, le fil ou les fils peuvent être en argent.

L'utilisation de fils en argent peut s'avérer intéressante. En effet, des fils d'argent peuvent tendre à se répartir naturellement autour d'un noyau d'un ensemble, dans ou sous la membrane de protection en cire de cet ensemble.

Eventuellement, les fils submicroniques peuvent être en cuivre, en un matériau à base de graphène, en carbone.

Selon un aspect, la cire peut être de l'Ethylcellulose.

L'utilisation d'une cire de type Ethylcellulose est intéressante, en étant notamment compatible avec des solvants de type eau ou éthanol.

Eventuellement, la cire peut comprendre de l'amylose, de l'amylose avec dérivé lipophilic, de l'epoxy...

Selon un aspect, les ensembles peuvent avoir un pourcentage massique fils/noyau moyen compris entre 10% et 30%, et par exemple aux alentours de 20%.

L'expression « pourcentage massique fils/noyau moyen compris entre 10% et 30% » signifie qu'en moyenne les ensembles de la poudre chargée présente ce pourcentage. Un tel ensemble tend à présenter une conductivité électrique intéressante.

Selon un mode réalisation lesdits ensembles sont formés en :
- fabrication d'une solution intermédiaire, ladite solution intermédiaire comprenant une solution d'un solvant et de ladite cire dans laquelle sont dispersés au moins lesdits fils,
- pulvérisant ladite solution intermédiaire dans un réacteur,

La poudre chargée est alors récupérée dans le réacteur.

Par exemple , la cire est mélangée dans le solvant dans lequel sont dispersés les fils submicroniques. A l'issue d'une étape de mélange, le procédé permet d'obtenir une solution du solvant et de la cire dans laquelle sont dispersés au moins les fils, cette solution étant dénommée « solution intermédiaire » par commodité.

Le solvant est choisi pour permettre de mélanger la cire, tout en ne dégradant pas les fils.

La solution intermédiaire est alors pulvérisée dans un réacteur pour faire disparaître le solvant, pour disposer voire adsorber les fils sur les noyaux de polymères thermoplastiques et pour disposer les membranes de protection des ensembles.

L'obtention de la poudre chargée se fait alors de façon « sèche », ce qui rend la poudre chargée sortant du réacteur directement manipulable.

Eventuellement, le procédé prévoit de ne pas agiter fortement le solvant et son contenu pour ne pas rompre les fils afin de ne pas réduire la conductivité électrique finale du produit et/ou afin de ne pas augmenter les risques HSE. Une agitation mécanique à faible vitesse peut être envisageable.

Eventuellement, la dispersion des fils dans la solution intermédiaire est par exemple assurée par une sonde ultrasonique.

Selon une première variante de ce mode de réalisation, ledit réacteur pouvant être un réacteur à lit d'air fluidisé, le procédé peut comporter une étape de fluidisation de la poudre originelle dans le réacteur à lit d'air fluidisé, ladite pulvérisation étant réalisée en pulvérisant ladite solution intermédiaire sur ladite poudre originelle.

Selon cette première variante du mode de réalisation, la poudre originelle contenant les noyaux de polymères thermoplastiques peut être introduite dans un réacteur à lit d'air fluidisé. Un lit d'air fluidisé est alors projeté dans le réacteur pour mettre en suspension les noyaux de polymères thermoplastiques dans une chambre du réacteur. Dès lors, la solution intermédiaire est pulvérisée dans le réacteur sur la poudre originelle pour former la poudre chargée.

Le lit d'air fluidisé peut être projeté à une température supérieure à une température d'évaporation du solvant, par exemple comprise entre 60 à 120°C.

Dans le réacteur à lit d'air fluidisé, le solvant s'évapore, la cire étant solidarisée notamment sur les noyaux portant également les fils.

A l'issue de cette étape, la poudre chargée peut être récupérée.

Le solvant peut comprendre de l'éthanol.

Selon un exemple testé avec succès, le solvant est de l'éthanol, la cire étant de l'Ethylcellulose, la température du lit d'air fluidisé étant supérieure à 78°C.

Selon une deuxième variante du mode de réalisation, ledit réacteur pouvant être un atomiseur, la solution intermédiaire pouvant inclure ladite poudre originelle, ladite pulvérisation peut être réalisée dans ledit atomiseur à l'aide d'un fluide présentant une température prédéterminée supérieure à une température d'évaporation du solvant.

Selon la deuxième variante, la poudre originelle contenant les noyaux de polymères thermoplastiques est aussi dispersée dans le solvant et donc dans la solution intermédiaire.

Dès lors, cette solution intermédiaire contenant le solvant, les fils, la cire et les noyaux de polymères thermoplastiques est introduite dans un atomiseur.

Le solvant s'évapore alors pour donner naissance à la poudre chargée.

Eventuellement, le solvant est de l'eau.

Selon un exemple testé avec succès, la cire est de l'Ethylcellulose, cette cire est mélangée dans un solvant de type eau qui contient les fils et les noyaux de polymères thermoplastiques.

Selon un aspect, ladite température prédéterminée est supérieure à une température de transition vitreuse de la cire.

Selon cet exemple, la température de l'air chaud est supérieure à la température de transition vitreuse de la cire pour optimiser la membrane de protection.

Une température de l'air chaud inférieure à la température de transition vitreuse de la cire est envisageable.

Par ailleurs, la présente invention vise aussi un procédé permettant d'obtenir un produit en matériaux composites électriquement conducteur à l'aide d'une poudre chargée.

L'invention vise alors un procédé de fabrication d'un produit en matériaux composites, le produit étant électriquement conducteur. Ce procédé comporte les étapes de :
- disposition d'une poudre chargée sur un renfort par voie sèche ou par voie humide, en utilisant une poudre chargée obtenue en appliquant le procédé décrit précédemment,
- passage dans un four dudit renfort et de ladite poudre chargée, ledit four appliquant un cycle de chauffage prédéterminé.

L'utilisation de charges fonctionnelles complexes en raison de leurs géométries et de leurs tailles peut rendre l'obtention d'un produit électriquement conducteur difficile, à cause par exemple d'un risque de formation d'agrégats ou de cisaillements de fils de la poudre chargée, voire d'une mauvaise dispersion.

Selon ce procédé, la poudre chargée est dès lors utilisée dans le cadre d'une procédure d'imprégnation par voie sèche ou humide. La voie sèche nécessite un poudrage de la poudre chargée relativement peu traumatisant pour cette poudre chargée. De même, la voie humide consiste à disperser la poudre chargée dans un bain, par exemple à l'aide d'ultrasons pour ne pas endommager les fils.

A l'issue de la disposition de la poudre chargée sur le renfort, le renfort recouvert de poudre chargée passe dans un four. Les membranes de protection sont éliminées par fusion ou sublimation. Les noyaux de polymères thermoplastiques formant au moins partiellement la matrice du produit et les fils s'accrochent alors sur les renforts.

Eventuellement, la cire peut s'évaporer. En cas d'évaporation, le procédé peut présenter une étape d'aspiration des vapeurs. La cire peut être choisie pour présenter une température de dégradation la plus faible possible, et éventuellement inférieure à 330 degrés Celsius.

Alternativement, la cire peut également faire partie de la matrice, voire peut apporter des propriétés complémentaires au produit.

Le cycle de chauffage peut comporter :
- une première phase de montée en température selon un gradient de 50°C par minute jusqu'à une température maximale de 330°C
- une deuxième phase de maintien de ladite température maximale pendant une durée comprise entre 15 et 30 minutes.

L'invention et ses avantages apparaîtront avec plus de détails dans le cadre de la description qui suit avec des exemples donnés à titre illustratif en référence aux figures annexées qui représentent :
- la figure 1, une vue illustrant un procédé pour obtenir des ensembles noyau/fils/membrane de protection,
- les figures 2 à 3, des vues illustrant le procédé de fabrication d'une poudre chargée,
- les figures 4 à 6, des vues illustrant le procédé de fabrication d'un produit en matériaux composites électriquement conducteur avec une poudre chargée.

Les éléments présents dans plusieurs figures distinctes sont affectés d'une seule et même référence.

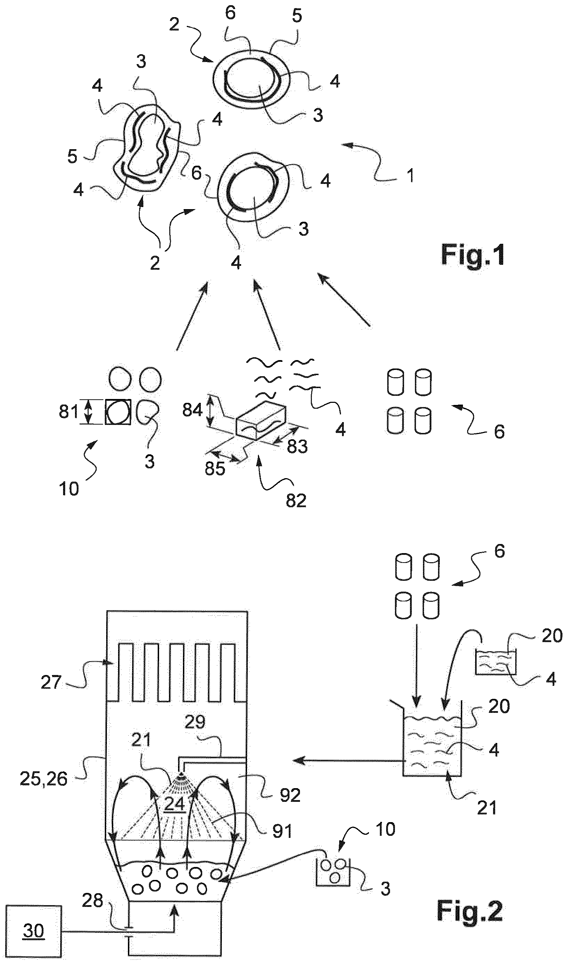

La figure 1 illustre un procédé permettant d'obtenir une poudre chargée 1 susceptible d'être employée par un procédé de fabrication d'un produit en matériaux composites électriquement conducteur.

Ce procédé comporte ainsi une étape de réalisation d'une poudre, cette poudre étant dite « poudre originelle 10 » par commodité pour être distinguée des autres poudres utilisées.

La poudre originelle 10 est une poudre pouvant être utilisée en tant que matrice dans un produit en matériaux composites. La poudre originelle 10 est munie de noyaux 3 en polymères thermoplastiques, le terme « noyau » désignant aussi bien un grain qu'un flocon. La poudre originelle peut ainsi comprendre des grains et/ou des flocons. Une telle poudre originelle 10 peut être réalisée par une méthode classique de fabrication de poudre.

Ces noyaux 3 de polymères thermoplastiques peuvent être réalisés avec une matière appartenant à la famille du Polyaryletherketone (PAEK) ou du Poly(sulfure de phénylène) (PPS) ou du Polyétherimide (PEI) ou du polyimide (PI).

Par ailleurs, chacun noyau 3 peut être inscrit dans un cube. Chaque coté du cube s'étend par exemple sur une longueur 81 comprise entre 20 micromètres inclus et 100 micromètres inclus.

Selon le procédé, la poudre chargée 1 est obtenue en combinant la poudre originelle 10 avec des fils 4 et de la cire 6.

Les fils 4 sont réalisés à partir d'une matière électriquement conductrice, et par exemple de l'argent. De plus, les fils 4 sont submicroniques. En particulier, chaque fil 4 peut être inscrit dans un parallélépipède rectangle 85 qui présente une longueur 83 comprise entre 50 micromètres inclus et 200 micromètres inclus, une hauteur 84 comprise entre 100 nanomètres inclus et 400 nanomètres inclus, et une largeur 85 comprise entre 100 nanomètres inclus et 400 nanomètres inclus.

Par ailleurs, la cire peut par exemple être de l'Ethylcellulose.

Dès lors, la poudre chargée 1 obtenue contient majoritairement des ensembles 2. Chaque ensemble 2 comprend un unique noyau 3, au moins un fil 4 et une membrane de protection 5 en cire 6 qui sont solidaires entre eux. Par exemple et pour un ensemble 2, au moins un fil 4 est disposé voire adsorbé sur le noyau 3 de cet ensemble, la membrane de protection 5 formant une capsule dans laquelle chaque fil 4 et le noyau 3 se trouvent. Pour un autre type d'ensemble, au moins un fil 4 peut être noyé au moins partiellement dans la membrane de protection 5, ou peut être collé sur cette membrane de protection 5.

Pour optimiser le caractère électriquement conducteur de la poudre chargée, les ensembles peuvent avoir un pourcentage massique moyen fil(s) 4 /noyau 3 compris entre 10% et 30%.

Les figures 2 à 3 illustrent diverses variantes d'un mode de réalisation pour obtenir une poudre chargée.

Selon ce mode de réalisation, la cire 6 est disposée dans un solvant 20, pour obtenir une solution intermédiaire 21 dans laquelle les fils 4 sont dispersés. Les fils sont par exemples dispersés par une sonde à ultrasons.

Selon une première alternative, les fils 4 sont dispersés dans le solvant 20, puis la cire est mélangée dans le mélange solvant/ fils.

Selon une deuxième alternative, la cire est mélangée dans le solvant puis les fils sont dispersés dans la solution en résultant.

Quelle que soit l'alternative, la solution intermédiaire 21 contenant au moins la cire mélangée dans le solvant et les fils dispersés est pulvérisée dans un réacteur 25.

Selon une première variante illustrée sur la figure 2, la solution intermédiaire 21 contient uniquement la cire mélangée dans le solvant et les fils dispersés. La solution intermédiaire est pulvérisée dans un réacteur 25. Le réacteur 25 est un réacteur à lit d'air fluidisé 26. Un tel réacteur à lit d'air fluidisé 26 contient une enceinte délimitant une chambre 24. De plus, le réacteur à lit d'air fluidisé 26 présente une entrée d'air 28 pour injecter un lit l'air fluidisé 30 dans la chambre 24. Cet air traverse ensuite un filtre 27 avant d'être expulsé en dehors du réacteur.

De plus, le réacteur à lit d'air fluidisé 26 comporte une buse de pulvérisation 29

Dès lors, la poudre originelle 10 est introduite dans la chambre 24. La poudre originelle 10 est alors fluidisée par le lit d'air fluidisé 30.

La fluidisation de la poudre originelle induit en effet le placement d'une colonne de noyaux dans un courant d'air ascendant, jusqu'à obtenir une suspension, sans mouvement significatif des noyaux 3. Une telle suspension est obtenue au travers d'une différence de pression différentielle entre la base et le sommet de la colonne.

La poudre originelle est ainsi mise en suspension dans la chambre 24.

La solution intermédiaire 21 est alors pulvérisée dans le réacteur à lit d'air fluidisé 26 sur la poudre originelle.

Cette solution intermédiaire 21 représente un mélange enrobant qui est pulvérisé sur les noyaux. Le mélange enrobant prend la forme de gouttelettes munies de cire, de fils et du premier solvant. Les gouttelettes entrent en contact avec la surface des noyaux pour s'y déposer.

Dans le lit d'air fluidisé, les noyaux recouverts de gouttelettes de mélange enrobant se déplacent, sortent de la zone de pulvérisation 91 et entrent dans une zone d'expansion 92. Il en résulte une circulation des noyaux qui induit un séchage et donc une évaporation du solvant. Ces étapes sont répétées plusieurs fois, en raison de passages successifs des noyaux dans la zone de pulvérisation 91 et dans la zone d'expansion 92 où a lieu le séchage. Ces passages successifs tendent à l'obtention d'un enrobage continu et homogène des noyaux avec des fils et de la cire.

Cette première variante tend à permettre l'enrobage des noyaux 3 en suspension dans la chambre 24, en continu avec un enrobage comprenant de la cire et des fils d'argent dans un solvant.

Cette première variante a été testée avec succès en utilisant une cire d'Ethylcellulose et des fils d'argent dans une solution hydroalcoolique sur des noyaux de PEKK. Le solvant comprenait de l'Ethanol.

Ce processus a été mis en oeuvre durant une période de moins de dix minutes avec un lit d'air chaud et a permis d'obtenir 450 grammes de poudre chargée. Une observation au microscope optique a permis de vérifier la présence de noyaux portant des fils d'argent, et un nombre limité de fils d'argent isolés. Le pourcentage massique fils 4 /noyau 3 moyen était de l'ordre de 22%.

Cette poudre chargée a ensuite été utilisée pour former des éprouvettes en matériaux composites ayant une conductivité électrique intéressante, de l'ordre de 10 Siemens/m.

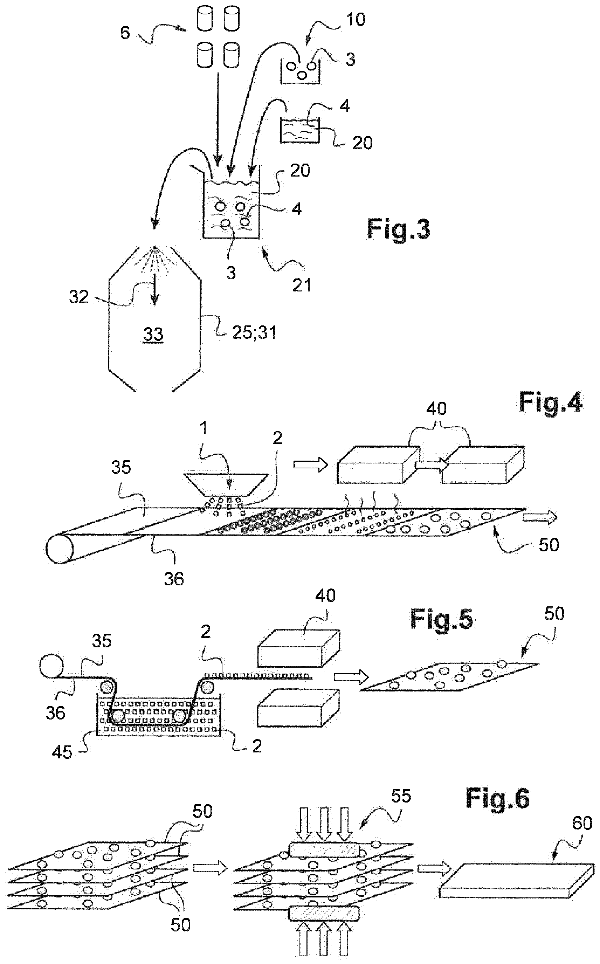

Selon la deuxième variante de la figure 3, le réacteur 25 est un atomiseur 31. Un tel atomiseur 31 comprend une enceinte délimitant une chambre 33. De plus, l'atomiseur 31 présente un système de pulvérisation pour pulvériser un mélange dans la chambre 33 avec de l'air chaud.

La poudre originelle 10 est selon cette deuxième variante dispersée dans la solution contenant le solvant 20 ainsi que la cire mélangée et les fils. La solution intermédiaire contient donc selon cette deuxième variante non seulement le solvant 20 ainsi que la cire mélangée et les fils, mais aussi la poudre originelle sous une forme dispersée.

L'étape de fabrication de la solution intermédiaire comporte donc une étape de dispersion des fils, une étape de dispersion de la poudre originelle, et une étape de mélange de la cire dans le solvant.

Les fils et la poudre originelle peuvent être dispersés simultanément.

Par exemple, selon une première méthode, les fils 4 et la poudre originelle sont dispersés dans le solvant 20, puis la cire est disposée dans le mélange solvant/ fils.

Selon une deuxième méthode, la cire est disposée dans le solvant puis les fils et la poudre originelle sont dispersés dans la solution en résultant.

D'autres méthodes sont envisageables les fils et la poudre originelle pouvant être dispersés séparément.

La solution intermédiaire est alors pulvérisée par l'atomiseur à l'aide d'un fluide présentant une température prédéterminée supérieure à une température d'évaporation du solvant 20, et éventuellement à une température de transition vitreuse de la cire.

Cette deuxième variante permet l'encapsulation suite à l'évaporation du solvant de noyaux et de fils par un agent encapsulant de type cire pendant une pulvérisation à chaud. La pulvérisation induit la formation de gouttes se transformant en ensembles secs.

Cette deuxième variante a été testée avec succès en utilisant une cire d'Ethylcellulose, des fils d'argent et de l'eau en tant que solvant.

Ce processus a été mis en oeuvre durant une période de moins de 10 mn avec de l'air chaud à une température inférieure à la température de transition vitreuse de la cire, et a permis d'obtenir 50 grammes de poudre chargée. Une observation au microscope optique a permis de vérifier la présence de noyaux portant des fils d'argent.

Cette poudre chargée a ensuite été utilisée pour former des éprouvettes en matériaux composites ayant une conductivité électrique intéressante.

Ce processus a aussi été mis en oeuvre en ajoutant un plastifiant pour abaisser la température de transition vitreuse de la cire durant une période de moins de dix minutes avec de l'air chaud à une température supérieure à la température de transition vitreuse ainsi modifiée de la cire, et a permis d'obtenir 50 grammes de poudre chargée. Une observation au microscope optique a permis de vérifier la présence de noyaux portant des fils d'argent.

Cette poudre chargée a ensuite été utilisée pour former des éprouvettes en matériaux composites ayant une conductivité électrique intéressante

Selon un autre aspect, un procédé de fabrication d'un produit en matériaux composites peut utiliser la poudre chargée.

En référence aux figures 4 et 5, la poudre chargée 1 est utilisée pour être disposée sur un renfort 35. Ce renfort 35 comprend des fibres par exemple disposés sur une bande 36.

Selon une première méthode d'imprégnation par voie sèche illustrée sur la figure 4, la poudre chargée 1 est répandue par poudrage sur le renfort 35. Un système de poudrage connu peut être utilisé.

Selon une deuxième méthode d'imprégnation par voie humide illustrée sur la figure 5, la poudre chargée 1 est dispersée dans un bain 45. Le renfort 35 circule dans le bain 45 pour que la poudre chargée se dépose sur le renfort 35.

Quelle que soit la méthode d'imprégnation retenue, le renfort et la poudre chargée passent dans un four 40 qui applique un cycle de chauffage prédéterminé.

Par exemple, ce cycle de chauffage comprend une première phase de montée en température selon un gradient de 50°C par minute jusqu'à une température maximale de 330°C, puis une deuxième phase de maintien de ladite température maximale pendant une durée comprise entre 15 et 30 minutes et par exemple de 20 minutes.

A l'issue de cette opération, un produit 50 est obtenu. Ce produit 50 est en matériaux composites électriquement conducteur muni d'un renfort imprégné par les noyaux et les fils de la poudre chargée.

En référence à la figure 6, des produits 50 de ce type peuvent être empilés puis sont disposés dans une presse de compactage 55 pour obtenir un stratifié 60 en matériaux composites.

Par ailleurs et indépendamment de la variante, les diverses dispersions évoquées peuvent être réalisées par ultrasons, par exemple avec un bain à ultrasons ou une sonde ultrasonique, pour éviter de dégrader les fils notamment.

## Revendications

1. Procédé de fabrication d'une poudre électriquement conductrice de polymères thermoplastiques, cette poudre électriquement conductrice de polymères thermoplastiques étant dite « poudre chargée (1) »,
**caractérisé en ce que** le procédé comporte les étapes de :
- réalisation d'une poudre originelle (10) contenant des noyaux (3) de polymères thermoplastiques, chacun desdits noyaux (3) comprenant un grain ou un flocon,
- réalisation de ladite poudre chargée (1) à l'aide de la poudre originelle ainsi que de fils submicroniques électriquement conducteurs et de cire (6) en formant une pluralité d'ensembles (2), une plus petite dimension de chaque fil submicronique étant inférieure à un micron et supérieure ou égale à cent nanomètres, chaque ensemble (2) comprenant un dit noyau (3) ainsi qu'au moins un dit fil (4) et une membrane de protection (5) en ladite cire, au moins un dit fil et une dite membrane de protection étant disposés autour d'un dit noyau.

2. Procédé selon la revendication 1,
**caractérisé en ce que** chaque fil (4) est inscrit dans un parallélépipède rectangle s'étendant sur une longueur (83) comprise entre 50 micromètres inclus et 200 micromètres inclus, sur une hauteur (84) comprise entre 100 nanomètres inclus et 400 nanomètres inclus, et une largeur (85) comprise entre 100 nanomètres inclus et 400 nanomètres inclus.

3. Procédé selon l'une quelconque des revendications 1 à 2, **caractérisé en ce que** chacun desdits noyaux (3) est inscrit dans un cube présentant des côtés s'étendant chacun sur une longueur comprise entre 20 micromètres inclus et 100 micromètres inclus.

4. Procédé selon l'une quelconque des revendications 1 à 3,
**caractérisé en ce que** lesdits noyaux (3) de polymères thermoplastiques appartiennent à la famille du Polyaryletherketone (PAEK) ou du Poly(sulfure de phénylène) (PPS) ou du Polyétherimide (PEI) ou du polyimide (PI).

5. Procédé selon l'une quelconque des revendications 1 à 4, **caractérisé en ce que** lesdits fils (4) sont en argent.

6. Procédé selon l'une quelconque des revendications 1 à 5, **caractérisé en ce que** ladite cire (6) est de l'Ethylcellulose.

7. Procédé selon l'une quelconque des revendications 1 à 6,
**caractérisé en ce que** lesdits ensembles ont un pourcentage massique fils (4) /noyau (3) moyen compris entre 10% et 30%.

8. Procédé selon l'une quelconque des revendications 1 à 7,
**caractérisé en ce que** lesdits ensembles (2) sont formés en réalisant les étapes de :
- fabrication d'une solution intermédiaire (21), ladite solution intermédiaire (21) comprenant une solution d'un solvant (20) et de ladite cire (6) dans laquelle sont dispersés au moins lesdits fils (4),
- pulvérisation de ladite solution intermédiaire (21) dans un réacteur (25).

9. Procédé selon la revendication 8,
**caractérisé en ce que**, ledit réacteur (25) étant un réacteur à lit d'air fluidisé (26), le procédé comporte une étape de fluidisation de la poudre originelle dans le réacteur à lit d'air fluidisé (26), ladite pulvérisation étant réalisée en pulvérisant ladite solution intermédiaire (21) sur ladite poudre originelle dans le réacteur à lit d'air fluidisé (26).

10. Procédé selon la revendication 9,
**caractérisé en ce que** ledit solvant (20) comprend de l'éthanol.

11. Procédé selon la revendication 8,
**caractérisé en ce que** ledit réacteur (25) étant un atomiseur (31), la solution intermédiaire (21) incluant ladite poudre originelle (10) ladite pulvérisation est réalisée dans ledit atomiseur (31) à l'aide d'un fluide présentant une température prédéterminée supérieure à une température d'évaporation dudit solvant (20).

12. Procédé selon la revendication 11,
**caractérisé en ce que** ledit solvant (20) est de l'eau.

13. Procédé selon la revendication 11,
**caractérisé en ce que** ladite température prédéterminée est supérieure à une température de transition vitreuse de la cire.

14. Procédé de fabrication d'un produit en matériaux composites, ledit produit étant électriquement conducteur,
**caractérisé en ce que** ledit procédé comporte les étapes de :
- disposition d'une poudre chargée (1) sur un renfort (35) par voie sèche ou par voie humide, en utilisant une dite poudre chargée (1) obtenue en appliquant le procédé selon l'une quelconque des revendications 1 à 13,
- passage dans un four (40) dudit renfort (35) et de ladite poudre chargée (1), ledit four (40) appliquant un cycle de chauffage prédéterminé.

15. Procédé de fabrication selon la revendication 14,
**caractérisé en ce que** ledit cycle de chauffage comporte :
- une première phase de montée en température selon un gradient de 50°C par minute jusqu'à une température maximale de 330°C
- une deuxième phase de maintien de ladite température maximale pendant une durée comprise entre 15 et 30 minutes.

## Patentansprüche

1. Verfahren zur Herstellung eines als "geladenes Pulver (1)" bezeichneten elektrisch leitfähigen Pulvers aus thermoplastischen Polymeren,
**dadurch gekennzeichnet, dass** das Verfahren folgende Schritte umfasst:
• Herstellen eines ursprünglichen Pulvers (10), das Kerne (3) aus thermoplastischen Polymeren enthält, wobei jeder der Kerne (3) ein Korn oder eine Flocke umfasst,
• Herstellen des geladenen Pulvers (1) unter Verwendung des ursprünglichen Pulvers sowie elektrisch leitfähiger submikronischer Drähte und von Wachs (6) durch Bilden einer Vielzahl von Anordnungen (2), wobei eine kleinere Abmessung jedes submikronischen Drahts kleiner als ein Mikron und größer als oder gleich hundert Nanometer ist, wobei jede Anordnung (2) einen Kern (3) sowie mindestens einen Draht (4) und eine Schutzmembran (5) aus dem Wachs umfasst, wobei mindestens ein Draht und eine Schutzmembran um einen Kern angeordnet sind.

2. Verfahren nach Anspruch 1,
**dadurch gekennzeichnet, dass** jeder Draht (4) in einem rechteckigen Quader eingeschrieben ist, der sich über eine Länge (83) von 50 Mikrometern einschließlich bis 200 Mikrometern einschließlich, über eine Höhe (84) von 100 Nanometern einschließlich bis 400 Nanometern einschließlich und eine Breite (85) von 100 Nanometern einschließlich bis 400 Nanometern einschließlich erstreckt.

3. Verfahren nach einem der Ansprüche 1 bis 2,
**dadurch gekennzeichnet, dass** jeder der Kerne (3) in einen Würfel mit Seiten eingeschrieben ist, die sich jeweils über eine Länge von zwischen 20 Mikrometern einschließlich und 100 Mikrometern einschließlich erstrecken.

4. Verfahren nach einem der Ansprüche 1 bis 3,
**dadurch gekennzeichnet, dass** die thermoplastischen Polymerkerne (3) zur Familie der Polyaryletherketone (PAEK) oder Poly(phenylensulfide) (PPS) oder Polyetherimide (PEI) oder Polyimide (PI) gehören.

5. Verfahren nach einem der Ansprüche 1 bis 4,
**dadurch gekennzeichnet, dass** die Drähte (4) aus Silber bestehen.

6. Verfahren nach einem der Ansprüche 1 bis 5,
**dadurch gekennzeichnet, dass** das Wachs (6) Ethylcellulose ist.

7. Verfahren nach einem der Ansprüche 1 bis 6,
**dadurch gekennzeichnet, dass** die Anordnungen ein durchschnittliches Draht(4)-/Kern(3)-Massenprozentverhältnis zwischen 10% und 30% aufweisen.

8. Verfahren nach einem der Ansprüche 1 bis 7,
**dadurch gekennzeichnet, dass** die Anordnungen (2) hergestellt werden durch Ausführen der Schritte:
• Herstellen einer Zwischenlösung (21), wobei die Zwischenlösung (21) eine Lösung eines Lösungsmittels (20) und des Wachses (6) umfasst, in dem mindestens die Drähte (4) dispergiert sind,
• Zerstäuben der Zwischenlösung (21) in einem Reaktor (25).

9. Verfahren nach Anspruch 8,
**dadurch gekennzeichnet, dass** der Reaktor (25) ein Wirbelschichtreaktor (26) ist, wobei das Verfahren einen Schritt des Fluidisierens des ursprünglichen Pulvers in dem Wirbelschichtreaktor (26) umfasst, und dass das Zerstäuben durch Zerstäuben der Zwischenlösung (21) auf das ursprüngliche Pulver in dem Wirbelschichtreaktor (26) durchgeführt wird.

10. Verfahren nach Anspruch 9,
**dadurch gekennzeichnet, dass** das Lösungsmittel (20) Ethanol umfasst.

11. Verfahren nach Anspruch 8,
**dadurch gekennzeichnet, dass** der Reaktor (25) ein Vernebler (31) ist, die Zwischenlösung (21) das ursprüngliche Pulver (10) enthält, und dass die Zerstäubung in dem Vernebler (31) unter Verwendung eines Fluids mit einer vorgegebenen Temperatur durchgeführt wird, die höher ist als eine Verdampfungstemperatur des Lösungsmittels (20).

12. Verfahren nach Anspruch 11,
**dadurch gekennzeichnet, dass** das Lösungsmittel (20) Wasser ist.

13. Verfahren nach Anspruch 11,
**dadurch gekennzeichnet, dass** die vorgegebene Temperatur höher ist als eine Glasübergangstemperatur des Wachses.

14. Verfahren zur Herstellung eines Produkts aus Verbundwerkstoffen, wobei das Produkt elektrisch leitfähig ist,
**dadurch gekennzeichnet, dass** das Verfahren folgende Schritte umfasst:
• Bereitstellen eines geladenen Pulvers (1) auf einer Verstärkung (35) durch Trocken- oder Nassverfahren unter Verwendung eines durch Anwendung des Verfahrens nach einem der Ansprüche 1 bis 13 erhaltenen geladenen Pulvers (1),
• Durchführen der Verstärkung (35) und des geladenen Pulvers (1) durch einen Ofen (40), wobei der Ofen (40) einen vorgegebenen Heizzyklus anwendet.

15. Herstellungsverfahren nach Anspruch 14, **dadurch gekennzeichnet, dass** der Heizzyklus umfasst:
• eine erste Phase der Temperaturerhöhung mit einer Steigung von 50°C pro Minute bis zu einer maximalen Temperatur von 330°C;
• eine zweite Phase des Haltens der maximalen Temperatur für einen Zeitraum von 15 bis 30 Minuten.

## Claims

1. A method for manufacturing an electrically conductive powder of thermoplastic polymers, said electrically conductive powder of thermoplastic polymers being called "charged powder (1)", **characterized in that** the method comprises the following steps:
- producing an original powder (10) containing cores (3) of thermoplastic polymers, each of said cores (3) comprising a grain or a flake,
- producing said charged powder (1) using the original powder as well as electrically conductive submicron wires and wax (6) by forming a plurality of assemblies (2), a smaller dimension of each submicron wire being less than one micron and greater than or equal to one hundred nanometers, each assembly (2) comprising one of said cores (3) and at least one of said wires (4) and a protective membrane (5) in said wax, at least one of said wires and one of said protective membranes being arranged around one of said cores.

2. The method as claimed in claim 1, **characterized in that** each wire (4) is inscribed in a rectangular parallelepiped extending over a length (83) of between 50 micrometers, inclusive, and 200 micrometers, inclusive, over a height (84) between 100 nanometers, inclusive, and 400 nanometers, inclusive, and a width (85) of between 100 nanometers, inclusive, and 400 nanometers, inclusive.

3. The method as claimed in any one of claims 1 to 2, **characterized in that** each of said cores (3) is inscribed in a cube having sides each extending over a length of between 20 micrometers, inclusive, and 100 micrometers, inclusive.

4. The method as claimed in any one of claims 1 to 3, **characterized in that** said cores (3) of thermoplastic polymers belong to the family of polyaryletherketone (PAEK) or poly(phenylene sulfide) (PPS) or polyetherimide (PEI) or polyimide (PI).

5. The method as claimed in any one of claims 1 to 4, **characterized in that** said wires (4) are made of silver.

6. The method as claimed in any one of claims 1 to 5, **characterized in that** said wax (6) is made of ethylcellulose.

7. The method as claimed in any one of claims 1 to 6, **characterized in that** said assemblies have an average wire (4) / core (3) mass percentage of between 10% and 30%.

8. The method as claimed in any one of claims 1 to 7, **characterized in that** said assemblies (2) are formed by performing the following steps:
- manufacturing an intermediate solution (21), said intermediate solution (21) comprising a solution of a solvent (20) and of said wax (6), in which at least said wires (4) are dispersed,
- spraying said intermediate solution (21) in a reactor unit (25).

9. The method as claimed in claim 8, **characterized in that**, with said reactor unit (25) being a fluidized air bed (26), the method comprises a step of fluidizing the original powder in the fluidized air bed reactor (26), said spraying being carried out by spraying said intermediate solution (21) on said original powder in the fluidized air bed reactor (26).

10. The method as claimed in claim 9, **characterized in that** said solvent (20) comprises ethanol.

11. The method as claimed in claim 8, **characterized in that**, with said reactor unit (25) being an atomizer (31), the intermediate solution (21) including said original powder (10), said spraying is carried out in said atomizer (31) using a fluid having a predetermined temperature greater than an evaporation temperature of said solvent (20).

12. The method as claimed in claim 11, **characterized in that** said solvent (20) is water.

13. The method as claimed in claim 11, **characterized in that** said predetermined temperature is higher than a glass transition temperature of the wax.

14. A method for manufacturing a product made of composite materials, said product being electrically conductive, **characterized in that** said method comprises the following steps:
- arranging a charged powder (1) on a reinforcement matrix (35) using dry or wet processes, using said charged powder (1) obtained by applying the method as claimed any one of claims 1 to 13,
- placing said reinforcement matrix (35) and said charged powder (1) in an oven (40), said oven (40) applying a predetermined heating cycle.

15. The manufacturing method as claimed in claim 14, **characterized in that** said heating cycle comprises:
- a first phase of raising the temperature following a gradient of 50°C per minute up to a maximum temperature of 330°C
- a second phase of maintaining said maximum temperature for a period between 15 and 30 minutes.
